Europäisches Patentamt

European Patent Office

Office européen des brevets

(19)

(11) Publication number: **0 038 563**
A2

(12) # EUROPEAN PATENT APPLICATION

(21) Application number: **81103035.2**

(22) Date of filing: **22.04.81**

(51) Int. Cl.³: **G 02 B 7/26**
**G 01 M 11/00**

(30) Priority: **23.04.80 IT 6763480**

(43) Date of publication of application:
**28.10.81 Bulletin 81/43**

(84) Designated Contracting States:
**CH DE FR GB LI NL SE**

(71) Applicant: **CSELT Centro Studi e Laboratori
Telecomunicazioni S.p.A.
Via Guglielmo Reiss Romoli, 274
I-10148 Turin(IT)**

(72) Inventor: **Costa, Bruno
Via R. Pilo, 44
Torino(IT)**

(74) Representative: **Riederer Freiherr von Paar zu Schönau,
Anton
Müllerstrasse 31
D-8000 München 5(DE)**

(54) **Optical system with high coupling efficiency, in particular for attenuation measurement apparatuses employing the back-scattering technique.**

(57) The optical system comprises a pair of cylindrical lenses located between two microscope objectives focusing at the fibre input face the light from a source with a rectangular emitting surface. The two cylindrical lenses have a common focus, they are oriented with their generatrices parallel to the major side of the rectangle and have such focal lengths that the whole optical system gives an image of the source in which the dissymmetry of the sides is reduced.

EP 0 038 563 A2

./...

Fig.1

*Patentanwalt*

*Dipl.-Ing. Anton Freiherr* *Riederer von Paar*

Müllerstraße 31
D-8000 München 5

☎ München (089) 26 60 60

Telex 523 903 claim d

☂ claims München

Konten:
Bayerische Vereinsbank München 563 390 (BLZ 700 202 70)
Gemeindesparkasse Gauting 624 072    (BLZ 700 560 90)
Postscheckkonto München 1921 39-809   (BLZ 700 100 80)

CSELT Centro Studi e Laboratori
Telecomunicazioni S.p.A.
Via Guglielmo Reiss Romoli, 274
I- 10148 Turin, Italy

OPTICAL SYSTEM WITH HIGH COUPLING EFFICIENCY, IN
PARTICULAR FOR ATTENUATION MEASUREMENT APPARATUSES
EMPLOYING THE BACK-SCATTERING TECHNIQUE

## Description

The present invention relates to a high-efficiency optical system for coupling a light-pulse source, having a substantially rectangular emitting surface, with an optical fibre.

More particularly, but not exclusively the invention concerns an optical system for apparatuses designed to measure the attenuation characteristics of optical fibres by the back-scattering technique.

It is known that semiconductor power lasers are generally used as light sources to effect certain measurements or tests on optical fibres; said lasers emit pulses that are focussed by lens systems or microscope objectives into the fibre input face. The use of semiconductor lasers, whose sizes are very reduced allows the manufacture of portable devices, that are particularly appropriate to effect field tests on the fibres. However, semiconductor power lasers have, as a rule, rectangular emitting surfaces that, if conventional optical systems are used, can be coupled to fibres (that generally have circular cross sections), only with high losses and unsatisfactory exploitation of the numerical aperture of the fibre. In fact, in planes parallel to the major side of the source, light is emitted at small angles, that exploit only a portion of the numerical aperture of the fibre; moreover, as the length of the major side can be even twice the fibre diameter a great part of the emitted light is not collected, unless said length is reduced by a suitable optical system.

The emission in planes parallel to the minor side, occurs on the contrary at large angles, with consequent considerable losses since a great part of the rays will be outside the acceptance angle of the fibre, unless the image is considerably magnified with consequent reduction in the emission angle. However, this requirement is opposite to the previous one.

In the particular case of systems for investigating fibre attenuation characteristics by measuring the energy backscattered along the fibre, which systems are particularly suited to effect field tests on the fibres as they require the access only to one fibre end, said high losses do not permit measurements of attenuations exceeding a certain limit as the backscattered power would be too low.

The literature does not offer special suggestions on how to ameliorate coupling efficiency between source and fiber in that kind of measurement. This problem is solved by the present invention that provides an optical system that presents high coupling efficiency between a source with a rectangular emission surface and a fibre with circular cross section and allows at the some time a reduction in spurious reflections.

It is a particular object of the present invention an optical system coupling a light-pulse source, having an emission surface with different dimensions and different emission characteristics in two perpendicular directions, and an optical fibre, in which a pair of microscope objectives forms at one fibre end an image of the source and in which between the two objectives of said pair there is placed a pair of cylindrical lenses, which have a common focus and are oriented with their generatrices parallel to the major size of the emitting surface, so that they act as lenses only for the rays that lie in a plane perpendicular to said generatrices; the focal lengths of said cylindrical lenses and said microscope objectives being such that the dissimmetry of the image dimensions, in said two, perpendicular directions, is at least reduced with respect to the dimension dissimetry of the source surface.

These features of the invention will become apparent from the following description of an embodiment, given by way of non limitative example and shown in the accompanying drawings in which:

- Fig. 1 is a diagrammatic cross-sectional view of the optical system according to the invention, taken in a plane parallel to the major side of the source;

- Fig. 2 is a cross-sectional view in a plane parallel to the minor side of the source, and

- Fig. 3 is a partial view of an alternative embodiment.

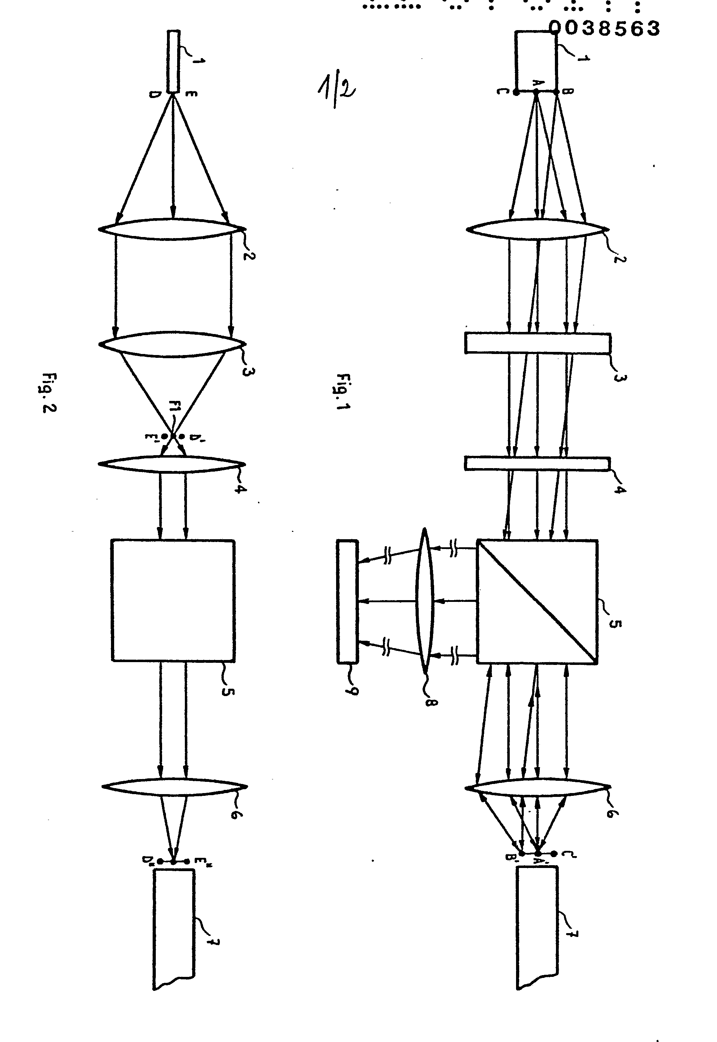

In Fig. 1 a source 1 of light pulses suitable to attenuation measurements, for instance a semiconductor laser, is located in a focus of a first spherical lens 2, or of a first system of spherical lenses such as a microscope objective; lens or objective 2 is followed by a pair of cylindrical lenses 3 and 4 arranged such as to have a common focus F1 and having the generatrices parallel to the major side of the emitting surface of source 1, that, as a rule, is rectangular.

The second cylindrical lens 4 is followed in turn by a beam splitter 5 . In one direction beam splitter 5 transmits a portion of the power associated with the pulses emitted by source 1 towards fibre 7 under test, whose end face is located in the focus of a second spherical lens 6, or of a second optical system such as a microscope objective. In the other direction beam splitter 5 reflects the pulses backscattered in fibre 7 and collected by objective 6, towards a collection system, schematized by lens 8; a photodetector 9, convertering light power into electric power is placed in the focus of said lens 8. The devices obtaining the attenuation values from the output electrical signals of photodetector 9 are not represented because they are conventional and are not of interest for the invention.

For the same reasons the supports of the optical system have not been represented.

Advantageously beam splitter 5 consists of a Glan-Thompson prism or of a Glan-Taylor prism; the purposes of this choice will become more apparent hereinafter.

The use of cylindrical lenses allows a source image to be formed at the fibre input end which image is better suited to the fibre characteristics from both the size and the emission angle standpoints. In fact in the plane of Fig. 1 (or in any plane parallel to it) the two cylindrical lenses 3, 4 act as mere transparent bodies: under these conditions the parallel beam outgoing from lens 2 will go on parallel through lenses 3, 4 and beam splitter 5 and it will be focused by lens 5 at the input of fibre 7. The linear magnification $M'$ of the image with respect to the object will be determined only by the spherical lenses. Said magnification is given by relationship $M' = f_2/f_1$ where $f_2$, $f_1$ are the focal lengths of lenses 6 and 2 respectively.

In the plane of Fig. 2 cylindrical lenses 3, 4 just act as lenses: therefore in focus F1 common to both cylindrical lenses a first image of source 1 will be formed with a magnification $M1 = f_3/f_1$, where $f_3$ is the focal distance of lens 3; at the fibre input an image will be formed whose magnification with respect to the object placed in F1. is $M2 = f_2/f_4$, where $f_4$ is the focal distance of lens 4.

Therefore the total magnification will be $M'' = M1 \cdot M2 = \dfrac{f_3 \cdot f_2}{f_1 \cdot f_4}$.

Of course we must bear in mind that the minimum size of an image produced by a lens is given by the diffraction properties of the lens.

By a suitable choice of the focal distances of the four lenses, in the image of the emitting source, which forms at the input of fibre 7 and is the apparent source of the light pulses sent into the fibre, the major side can be shortened with respect to actual source 1 and/or the minor side can be lenghthened; therefore the dissymmetry of said apparent source is reduced with respect to the actual source. The emission angle of the ray source is changed inversely to magnifications M', M''. Therefore said magnifications ought to be chosen such as to adapt in the best possible way the radiations emitted in the two planes to the fibre numerical aperture.

Figures 1, 2 schematically shows how the images of three points A, B, C of the major side of source 1 and of two points D, E of the minor side are formed.

Efficiency is further improved by using a Glan prism as the beam splitter which transmits light polarized in one direction and reflects light polarized in orthogonal direction. This feature permits also a partial elimination of spurious pulses reflected at the fibre input.

- 6 -

In fact the light of a semiconductor laser is at least partially polarized, and then by a suitable arrangement of the prism and of source 1 a transmission coefficient of about 75% can be obtained instead of the transmission coefficient of about 50% attainable by a conventional semitransparent mirror. In the opposite direction, backscattered light is depolarized, and therefore 50% of it (corresponding to the polarization perpendicular to that of the incident beam) is reflected by the prism; on the contrary most of the light reflected by the fibre end face maintains the polarization imposed by prism 5. As a consequence the backscattered light will be reflected by the prism towards the measurement apparatuses; as to the light reflected by the fibre and forming the spurios pulse, the part thereof which has maintained the polarization will pass through the prism and therefore it will not affect the measurement.

To eliminate also the residual spurious pulse, the fibre end could be introduced into a cell matching the refractive index and eliminating spurious reflections like that described by the inventor and by B. Sordo in the paper "Experimental study of optical fibres attenuation by a modified backscattering technique", presented, at the third European Conference on Optical Communications, Munich, 14-16 September 1977.

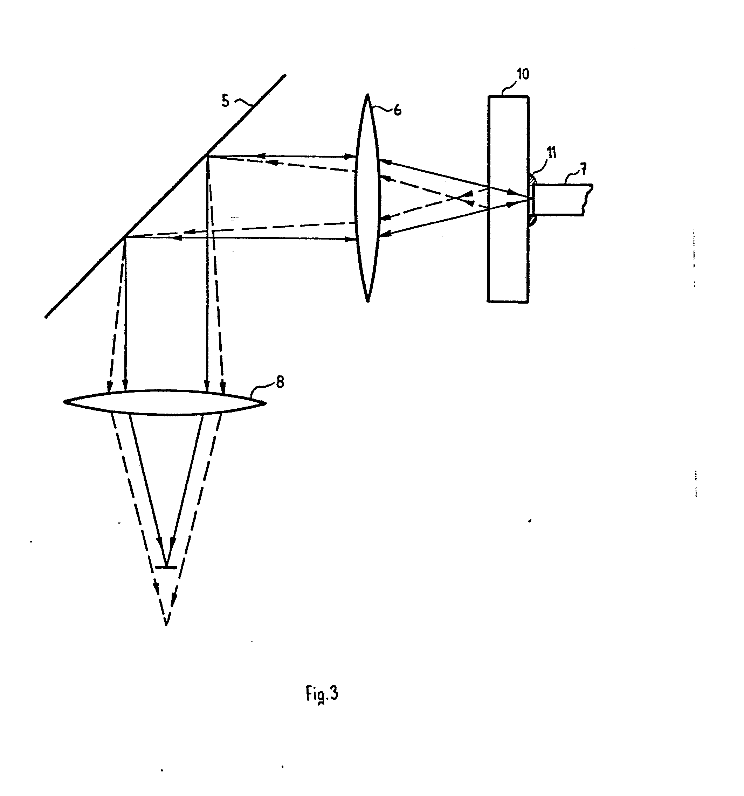

As an alternative a glass plate 10 can be placed before the fibre input face, as shown in Fig. 3; owing to said plate, rays forming the reflected spurious pulse no longer come from a source located in the focus of lens 6; and therefore said rays will no longer focus on    photodetector 9, of conveniently small size with consequent further reduction in the inconvenients due to spurious pulses.

With respect to the more obvious alternative method of using a glass covered with an antireflecting coating the above mentioned system has the advantage of being wavelength independent and less expensive. A drop 11 of index matching fluid placed between the glass plate and the fibre eliminates reflections from the fibre end face.

It is clear that what described has been given only by way of example and not in a limiting sense and that variations and modifications are possible without going out of the scope of the invention. More particularly even though the application to an attenuation measurement system based on the backscattering technique has been described, the invention it-self, as for as the optical coupling system is concerned, can be applied whenever a source and a fibre having different emission and respectively reception geometries are to be coupled and/or whenever a spurious reflection is to be separated from a useful signal.

Patent Claims

1. Optical system coupling a light-pulse source having an emission surface with different dimensions and different emission characteristics in two perpendicular directions, and an optical fibre, in which a pair of microscope objectives form at one fibre end an image of the source, characterized in that between the two objectives (2, 6) of said pair there is placed a pair of cylindrical lenses (3, 4) which have a common focus (F1) and are oriented with their generatrices parallel to the longer dimension of the emitting surface, so that they act as lenses only for the rays that lie in a plane perpendicular to said generatrices, the focal lengths of said cylindrical lenses (3, 4) and of said microscope objectives (2, 6) being such that the dissimmetry of the image dimensions in said two perpendicular directions, is at least reduced with respect to the dimension dissimmetry of the surface of the source (1).

2. Optical system according to claim 1, for an optical-fibre atten uation measurement system in which pulses are sent to a fibre end and the energy back-scattered along the fibre is collected from the same fibre end, characterized in that a beam splitter (5) of a type arranged to transmit polarized light and to reflect non-polarized light is located between the second cylindrical lens (4) and the second microscope objective (6).

3. Optical system according to claim 2, characterized in that said fibre end (7) is placed behind a transparent glass plate and con tacts it through an index-matching liquid.

4. Optical system for coupling a light pulse source and an optical fibre, basically as illustrated and described.

Fig. 1

Fig. 2

0038563

Fig.3